(19) Europäisches Patentamt
European Patent Office
Office européen des brevets

(11) **EP 2 889 119 B1**

(12) **EUROPEAN PATENT SPECIFICATION**

(45) Date of publication and mention
of the grant of the patent:
**22.02.2017 Bulletin 2017/08**

(21) Application number: **14198549.9**

(22) Date of filing: **17.12.2014**

(51) Int Cl.:
*B29C 49/00* *(2006.01)*   *B29C 44/18* *(2006.01)*
*B29C 44/44* *(2006.01)*   *B29C 49/46* *(2006.01)*
*B29K 23/00* *(2006.01)*   *B29K 105/04* *(2006.01)*
*B29C 49/04* *(2006.01)*   *B29C 49/60* *(2006.01)*
*B29L 22/00* *(2006.01)*   *B29C 44/34* *(2006.01)*
*B29C 49/64* *(2006.01)*

(54) **Method for producing skin-covered foamed molded article**

Verfahren zur Herstellung eines hautbedeckten, aufgeschäumten Formartikels

Procédé de production d'article moulé en mousse recouvert de peau

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2013 JP 2013267598**

(43) Date of publication of application:
**01.07.2015 Bulletin 2015/27**

(73) Proprietor: **JSP CORPORATION**
**Tokyo 100-0005 (JP)**

(72) Inventors:
• **Tokiwa, Tomoo**
**Kanuma-shi**
**Tochigi, 322-0014 (JP)**

• **Izumi, Kosuke**
**Kanuma-shi**
**Tochigi, 322-0014 (JP)**

(74) Representative: **Wagner Albiger & Partner**
**Patentanwälte mbB**
**Siegfried-Leopold-Strasse 27**
**53225 Bonn (DE)**

(56) References cited:
**EP-A1- 2 614 942      WO-A1-2013/148977**
**WO-A2-2012/066120     US-B1- 6 607 680**

EP 2 889 119 B1

**Description**

BACKGROUND OF THE INVENTION

Field of the Invention:

The present invention relates to a method for producing a skin-covered foamed molded article and, more specifically, to a method for producing a skin-covered foamed molded article including the steps of forming a hollow blow-molded article (namely, a skin defining a hollow interior space) by blow molding, filling expanded beads in the hollow interior space, and heating the expanded beads to fuse-bond the expanded beads to each other.

Description of Prior Art:

A skin-covered foamed molded article formed of expanded beads which are fuse-bonded together and covered with a skin is heretofore known. In one known method for producing such a skin-covered foamed molded article, a parison in a softened state is extruded from an extruder, placed in a mold and blow molded with pressurized air into a skin defining a hollow interior space. Then, expanded beads are filled in the hollow interior space, and a heating medium is supplied into the hollow interior space through heating medium supply pins inserted through the skin to heat the expanded beads so that the expanded beads are fuse-bonded to each other. After cooling, the product is taken out of the mold to obtain the aimed skin-covered resin foamed molded article.

For example, JP-A-2010-46920 discloses a method including the steps of filling expanded beads in a hollow interior space defined by a skin formed of a polystyrene-based resin, inserting heating medium supply pins through the skin still in a softened state, and blowing a heating medium, such as steam, into the hollow interior space through heating medium outlet ports of the pins to heat the expanded beads so that the expanded beads are fuse-bonded to each other.

JP-A-2008-273117 discloses a skin-covered polypropylene-based resin foamed molded article that uses a specific polypropylene-based resin as the skin to improve the fusion-bonding strength between the expanded beads and between the skin and the expanded beads.

EP 2 614 942 A1 discloses a method of producing a skin covered foamed molded article which has good fusion bonding between the expanded beads and a good fusion bonding between the expanded beads and the skin without requiring a long molding cycle time. Steam pin-insertion efficiency is improved by bringing the parison, during blow molding thereof into a hollow molded body, into contact with a protruding portion, which is protruded from an inner surface of the mold cavity toward inside of the cavity to induce a stretch in the recessed portion of the hollow molded body with reduced wall thickness for better punching ability. Improved steam pin insertion efficiency is therefore achieved mechanically.

WO 2013/148977 A1 is aimed as solving problems of wooden ties that are heavy and cause difficulties in transportation, and proposes as a substitute for them, light weight skin-covered foam mold articles of similar plastic composition for the skin and the foam.

SUMMARY OF THE INVENTION

Polypropylene-based resins have higher melt stretchability than polystyrene-based resins. When a polypropylene-based resin is used to form a skin by blow molding, the molded skin must be cooled sufficiently in order to ensure that the skin exhibits good punchability (ability to be punched) when the heating medium supply pins are inserted through the skin. When the skin has not been cooled sufficiently, the resin of the skin around the pins may be excessively stretched during the insertion of the heating medium supply pins, making it impossible to insert the heating medium supply pins through the skin. Even if the pins can be inserted through the skin, it is difficult to supply the heating medium sufficiently because the heating medium outlet ports of the pins are covered with the stretched skin.

Thus, to ensure that the skin exhibits good punchability when the heating medium supply pins are inserted through the skin, the skin must be cooled sufficiently. This results, however, in prolongation of the molding cycle time. In particular, when a skin-covered foamed molded article having a complicated shape or a skin-covered foamed molded article having a comparatively small thickness as a whole and therefore having a skin with a relatively large thickness is to be produced, the skin must be cooled especially sufficiently because there is a limitation in locations where the pins are inserted through the skin or in length of stroke through which the pins are moved to insert the pins through the skin.

It is, therefore, an object of the present invention to provide a production method by which a skin-covered foamed molded article which has a skin composed primarily of a polypropylene-based resin as a base resin and in which the expanded beads are strongly fuse-bonded to each other can be produced with a short molding cycle time.

[Means for Solving the Problem]

The present inventors have found that, when a polypropylene-based resin composition that satisfies specific requirements concerning the half-crystallization time and the tensile elongation at break upon heating is used to form the skin in a method for producing a skin-covered foamed molded article, the skin exhibits improved punchability when heating medium supply pins are inserted through the skin. The present invention has been accomplished based on the above finding.

In accordance with one aspect of the present invention there is provided:

[1] A method for producing a skin-covered foamed molded article, comprising the steps of:

extruding a melt of a polypropylene-based resin composition to form a parison in a softened state;
blow-molding the parison into a skin defining a hollow interior space;
inserting heating medium supply pins through the skin;
filling thermoplastic resin expanded beads in the hollow interior space of the skin; and
supplying a heating medium into the skin through the heating medium supply pins to fuse-bond the expanded beads filled in the skin to each other,
wherein the polypropylene-based resin composition satisfies the following requirements (A) and (B)

(A) the polypropylene-based resin composition has a tensile elongation at break at 80°C of 300 to 1,000%; and
(B) the polypropylene-based resin composition has a half-crystallization time at 130°C of 5 to 50 seconds.

The present invention further provides:

[2] The method for producing a skin-covered foamed molded article according to above [1], wherein the polypropylene-based resin composition contains at least one crystallization promoter selected from the group consisting of aromatic phosphoric ester metal salt compounds and sorbitol compounds.
[3] The method for producing a skin-covered foamed molded article according to above [1] or [2], wherein the crystallization promoter is present in an amount of 0.01 to 1 parts by weight based on 100 parts by weight of the polypropylene-based resin contained in the polypropylene-based resin composition.
[4] The method for producing a skin-covered foamed molded article according to any one of above [1] to [3], wherein the thermoplastic resin of the thermoplastic resin expanded beads is a polypropylene-based resin.
[5] The method for producing a skin-covered foamed molded article according to any one of above [1] to [4], wherein the skin has a thickness of 1.5 to 5 mm.

In this specification, a hollow blow-molded article produced by blow molding of a parison is also referred to simply as "skin", "heating medium supply pins" are occasionally referred to also as "steam pins", and "holes that are formed through the skin when the heating medium supply pin are inserted through the skin" are occasionally referred to also as "steam pin insertion holes".

According to the production method of the present invention, the steam pins can be inserted through the skin even if the resin of the skin has not been cooled to a sufficiently low temperature after the formation of the skin. As a result, the total molding cycle time from molding a skin to finally taking a skin-covered foamed molded article out of the mold can be shortened.

In addition, according to the method of the present invention, even if the temperature of the skin is comparatively high, the skin is stretched not excessively but moderately during the insertion of the steam pins. Thus, when a heating medium is thereafter supplied through the pins, the resin remaining around the steam pin insertion holes prevents the heating medium from leaking through the steam pin insertion holes and enables the heating medium to be efficiently supplied into and discharged out of the hollow interior space of the skin. As a result, a skin-covered foamed molded article having high fusion-bonding strength between the expanded beads can be produced with a short molding cycle time.

BRIEF DESCRIPTION OF THE DRAWINGS

Other objects, features and advantages of the invention will become apparent from the detailed description of preferred embodiments of the invention which follows, when considered in light of the accompanying drawings, in which:

FIG. 1 (a) is a schematic partial view explanatory of a steam pin inserting step in one preferred embodiment of the method according to the present invention and illustrating a skin formed in a mold cavity by blow molding;

FIG. 1 (b) is a schematic partial view illustrating a state of the skin of FIG. 1 (a) after the steam pin has been inserted therethrough;

FIG. 2 is a vertical cross-sectional view schematically illustrating a molding device for carrying out a method for producing a skin-covered foamed molded article according to the present invention; and

FIG. 3 shows the results obtained in Examples and Comparative Examples and is a plot of a total molding cycle time (seconds), which is a period of time required to produce a skin-covered foamed molded article, against a resin following length (mm), which is a length by which the resin of the skin around a steam pin is stretched following insertion movement of the steam pin.

DETAILED DESCRIPTION OF THE PREFERRED

EMBODIMENTS OF THE INVENTION

In one preferred embodiment of the present invention, a skin-covered foamed molded article is produced by a method including the steps of forming a parison by extruding a melt of a polypropylene-based resin composition containing a polypropylene-based resin (hereinafter occasionally referred to as "PP resin"), blow molding the parison in a softened state in a mold to form a skin defining therein a hollow interior space, filling expanded beads in the hollow interior space, and supplying a heating medium, such as steam, into the hollow interior space through steam pins inserted through the skin to heat the expanded beads so that the expanded beads are fuse-bonded to each other and the expanded beads in contact with the skin are fuse-bonded to the skin, thereby obtaining the skin-covered foamed molded article.

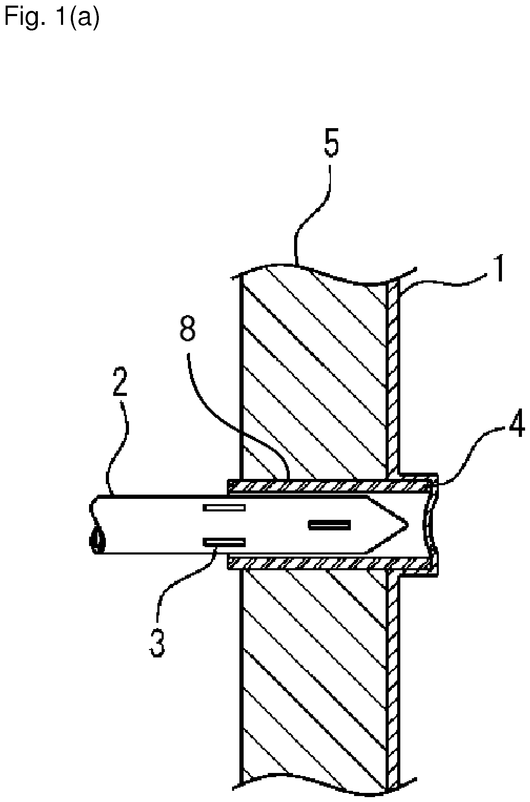

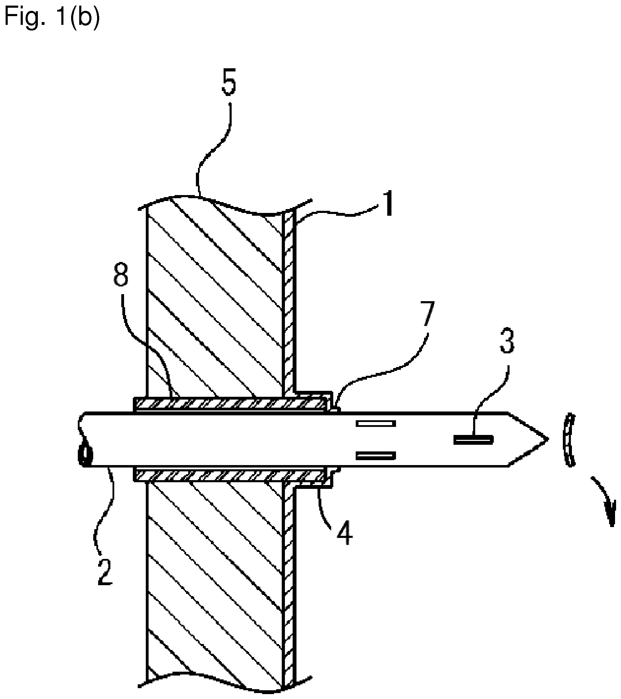

In the above method, the steam pins are each operable to punch a hole through the skin in a manner as schematically shown in FIG. 1 (a) and FIG. 1 (b). Although two or more steam pins are generally employed, the following description will refer to only one steam pin for simplicity of description. As shown in FIG. 1 (a), a parison (not shown) extruded from a parison forming die (not shown) and in a softened state is blow-molded into a skin 1 in a mold cavity of a mold 5. The mold 5 is provided with a guide 8 along which a steam pin 2 having slits 3 as steam outlet ports is moved. Since an end portion of the guide 8 is slightly protruded into the mold cavity in the illustrated embodiment, the skin 1 is formed with a recessed portion 4. After the parison has been blow-molded into the skin 1, the steam pin 2 is inserted through the skin 1 as shown in FIG. 1 (b).

It has been found that when the skin 1 has not been sufficiently cooled when the steam pin 2 is inserted, that portion of the skin 1 around the steam pin 2 is apt to be excessively stretched during the insertion movement of the steam pin 2, making it impossible to insert the steam pin 2 through the skin 1. Even if the steam pin 2 can be inserted through the skin 1, the resin around the steam pin 2 is apt to be excessively stretched so that slits 3 as steam outlet ports formed through the peripheral walls of the steam pin 2 are closed by the resin. In such a case, because the steam cannot be supplied uniformly into the hollow interior space of the skin 1 or because it takes a long time to supply steam into the hollow interior space, the fusion-bonding between the expanded beads may be insufficient. The present invention has solved this problem as described in detail hereinafter.

On the other hand, it has been found to be desirable that the skin 1 in the recessed portion 4 is stretched moderately and slightly drawn into the hollow interior space along with the insertion movement of the steam pin 2 so that, after a steam pin insertion hole has been punched, the resin remaining about the periphery of the steam pin 2 forms a cylindrical pleat-shaped portion 7 that can close the gap between the guide 8 and the steam pin 2. Namely, the cylindrical pleat-shaped portion 7 is formed when skin 1 in the recessed portion 4 is stretched and the steam pin insertion hole is formed. Because the pleat-shaped portion 7 of the skin 1 serves as a seal that effectively prevents the heating medium supplied through the steam pin 2 from leaking from the gap, leakage of the heating medium can be effectively prevented. The present invention has also made it possible to achieve such a desirable effect. Incidentally, the length by which the resin of the skin 1 is stretched following the steam pin 2 during the insertion of the steam pin 2, i.e., the length from the inner surface of the skin 1 to the end of the stretched resin (the length of the pleat-shaped portion 7 in the direction parallel to the axis of the steam pin 2), is hereinafter occasionally referred to as "resin following length."

It has been found that when the skin is constituted of a PP resin composition having a tensile elongation at break at 80°C of 300 to 1,000% and a half-crystallization time at 130°C of 5 to 50 seconds, the steam pins can be properly inserted through the skin even when the temperature of the skin is comparatively higher than that employed in a conventional method, so that steam is supplied uniformly to the expanded beads filled in the hollow interior space of the skin. As a result, a skin-covered foamed molded article in which the expanded beads are strongly fuse-bonded to each other can be obtained. Incidentally, since the skin is prepared by the blow molding of a parison, the PP resin composition which forms the parison is the same as that of the skin. Also, since the parison is produced by extruding a melt of a resin composition, the resin composition of the melt is the same as that of the parison.

Thus, with the method according to the present invention, the steam pins can be inserted properly through the skin after the formation of the skin even if the temperature of the resin of the skin is higher than that in a conventional method. In other words, the temperature range in which the steam pins can be inserted through the skin is widened. As a result, the molding cycle time can be shortened as a whole. Usually, when the half-crystallization time is not adjusted, the temperature range in which the steam pins 2 can be inserted through the skin is 70 to 80°C. However, when the half-crystallization time is adjusted to the above range, the steam pins can be inserted through the skin 1 even when the temperature of the resin of the skin is in the range of 70°C to 100°C, which is wider on the high-temperature side than that in which the steam pins can be inserted in a conventional method.

When the half-crystallization time is long, it takes a long time to cool the skin 1 to a temperature range in which the steam pins can be inserted. In other words, it takes a long time until the steam pins can be inserted after the mold is closed, and, consequently, the total molding cycle time is prolonged. On the other hand, when the half-crystallization time is too short, the steam pins could be inserted immediately after the closure of the mold. However, the resin composition is hardened so quickly that gaps may be created between the steam pins and the holes formed by the steam pins. Formation of such gap may cause leakage of steam therethrough.

The half-crystallization time as used herein may be determined by the following method. First, the resin composition that is to be extruded into a parison is formed into a film-like shape. Alternatively, a film-like sample may be cut out of the skin of a skin-covered foamed molded article. The film-like sample is mounted on a support. Then, the sample held on the support is melted using a crystallization speed analyzer (MK-801, manufactured by Kotaki Seisakusho Ltd., for example) and is placed in an oil bath maintained at 130°C. Then, transmitted light, which increases as the degree of crystallization of the sample in the oil bath increases, is measured with the crystallization speed analyzer. The half-crystallization time can be calculated from the measurement value and the Avrami equation.

The resin composition for the skin has a tensile elongation at break at 80°C of 300 to 1,000%, preferably 400 to 900%, more preferably 500 to 850%. When the resin composition for the skin has a tensile elongation at break at 80°C in the above range, the resin following length, the length by which the resin of the skin is stretched during the insertion of the steam pins, can be moderate. When the tensile elongation at break is too large, the resin of the skin is excessively stretched following the steam pins during the insertion of the steam pins. Then, the supply and discharge of the heating medium may not be carried out properly or, even worse, the steam pins may not be able to punch a hole through the skin. On the other hand, when the tensile elongation at break is too small, the steam pins could be inserted but the resin of the skin may be so unstretchable that the resin following length may be too short. Thus, gaps may be created between the steam pins and the steam pin insertion holes and the steam may leak when the steam is supplied to heat the expanded beads. The reason why the tensile elongation at break is measured at 80°C is that the parison is molded into a skin in the mold by blow molding at approximately 80°C.

According to the production method of the present invention, the pleat-shaped portion may be formed easily. The optimum length of the resin that is drawn into the hollow interior space (i.e., resin following length) may be determined in view of the thickness of the skin and so on. From the standpoint of preventing the heating medium from leaking through the steam pin insertion holes and supplying the steam uniformly into the hollow interior space, the length is preferably 1 to 5 mm.

The tensile elongation at break can be measured using a Tensilon universal tester and a constant temperature reservoir in combination according to JIS K7127 (1999), for example.

As shown in FIG. 1 (a), each steam pin 2 has a plurality of slits 3 from which the heating medium is injected into the hollow interior space of the skin which is filled with the expanded beads. The slits 3 have such a size that prevents passage of the expanded beads therethrough. The slits 3 are preferably formed in the peripheral wall of each steam pin 2 as shown in FIG. 1 (a) from the standpoint of supplying the heating medium uniformly to the expanded beads filled in the hollow interior space of the skin 1. Also, from the same standpoint, when a skin-covered foamed molded article having a flat-plate like shape, for example, is to be produced, the slits 3 are preferably elongated in the thickness direction of the skin-covered foamed molded article.

When the skin has a thickness in the range of 1 to 7 mm, the resulting skin-covered foamed molded article is light in weight and has sufficient strength for practical use. Additionally, forms of the expanded beads do not stand out on the surface of the skin-covered foamed molded article. From this standpoint, the skin preferably has a thickness of 1.5 to 5 mm, more preferably, 2 to 4.5 mm.

One possible method to shorten the half-crystallization time of the resin composition containing a PP resin as a base resin and to adjust its elongation at 80°C to the specific range as described above is to add at least one crystallization promoter selected from aromatic phosphoric ester metal salt compounds and sorbitol compounds to the PP resin composition.

Examples of the aromatic phosphoric ester metal salt compounds include sodium bis(4-t-butylphenyl)phosphate, lithium bis(4-t-butylphenyl)phosphate, aluminum bis(4-t-butylphenyl)phosphate, calcium bis(4-t-butylphenyl)phosphate, sodium 2,2-methylene-bis(4,6-di-t-butylphenyl)phosphate, lithium 2,2-methylene-bis(4,6-di-t-butylphenyl)phosphate, aluminum 2,2-methylene-bis(4,6-di-t-butylphenyl)phosphate, calcium 2,2-methylene-bis(4,6-di-t-butylphenyl)phosphate, and (2-hydroxy-2-oxo-4,6,10,12-tetra-t-butyl-1,3,2-dibenzo[d,g]perhydrodioxaphosphocin sodium salt. Some of the aromatic phosphoric ester metal salt compounds are commercially available from ADEKA Corporation under the trade names "Adekastab NA-11," "Adekastab NA-27" and "Adekastab NA-71," for example.

Examples of the sorbitol compounds include 1,3,2,4-dibenzylidene sorbitol, 1,3-benzylidene-2,4-p-methylbenzylidene sorbitol, 1,3-benzylidene-2,4-p-ethylbenzylidene sorbitol, 1,3-p-methylbenzylidene-2,4-benzylidene sorbitol, 1,3-p-ethylbenzylidene-2,4-benzylidene sorbitol, 1,3-p-methylbenzylidene-2,4-p-ethylbenzylidene sorbitol, 1,3-p-ethylbenzylidene-2,4-p-methylbenzylidene sorbitol, 1,3,2,4-di(p-methylbenzylidene)sorbitol, 1,3,2,4-di(p-ethylbenzylidene)sorbitol, 1,3,2,4-di(p-n-propylbenzylidene)sorbitol, 1,3,2,4-di(p-i-propylbenzylidene)sorbitol, 1,3,2,4-di(p-n-butylbenzylidene)sorbitol, 1,3,2,4-di(p-s-butylbenzylidene)sorbitol, 1,3,2,4-di(p-t-butylbenzylidene)sorbitol, 1,3,2,4-di(p-methoxybenzylidene)sorbitol, 1,3,2,4-di(p-ethoxybenzylidene)sorbitol, 1,3-benzylidene-2,4-p-chlorobenzylidene sorbitol, 1,3-p-chlorobenzylidene-2,4-benzylidene sorbitol, 1,3-p-chlorobenzylidene-2,4-p-methylbenzylidene sorbitol, 1,3-p-chlorobenzylidene-2,4-p-ethylbenzylidene sorbitol, 1,3-p-methylbenzylidene-2,4-p-chlorobenzylidene sorbitol, 1,3-p-ethylbenzylidene-2,4-p-chlorobenzylidene sorbitol, 1,3,2,4-di(p-chlorobenzylidene)sorbitol, 1,3,2,4-bis-O-(4-methylbenzylidene)-D-sorbitol, and 1,3,2,4-bis-O-(3,4-dimethylbenzylidene)-D-sorbitol. Some of the sorbitol compounds are commercially available from Milliken & Company under the trade name "Millad 3988," from Mitsui Chemicals, Inc. under the trade name "NC4," and from New Japan Chemical Co., Ltd. under the trade name "GELL ALL MD," for example.

In the present invention, the above-mentioned aromatic phosphoric ester metal salt compounds and/or the sorbitol compounds may be used singly or as a mixture of two or more thereof. The content of the crystallization promoter is preferably 0.01 to 1 part by weight, more preferably 0.02 to 0.7 part by weight, much more preferably 0.05 to 0.5 part by weight, based on 100 parts by weight of the PP resin of the skin.

More specifically, when the aromatic phosphoric ester metal salt compound is used in an amount of 0.01 to 0.5 parts by weight, more preferably 0.02 to 0.5 parts by weight, much more preferably 0.05 to 0.3 parts by weight, based on 100 parts by weight of the PP resin for the skin.

In the case of the sorbitol compounds, the amount thereof is preferably 0.2 to 1 part by weight, more preferably 0.25 to 0.7 part by weight, much more preferably 0.3 to 0.5 part by weight, based on 100 parts by weight of the PP resin for the skin.

When the amount of the crystallization promoter is in the above range, the intended purpose can be accomplished, in other words, the PP resin composition for the skin crystallizes rapidly and exhibits a specific tensile elongation at break at 80°C. This is preferred because good steam pin insertion holes can be formed.

The PP resin composition preferably has a crystallization temperature of in the range of 125°C to 135°C as measured according to JIS K7121 (1987),. When the crystallization temperature is in the above range, the PP resin composition containing a PP resin as a base resin crystallizes rapidly so that the parison can be molded into a skin 1 by blow molding and good steam pin insertion holes can be formed through the skin.

The term "PP resin" as used herein refers to a resin containing 50 mol% or more, preferably 60 mol% or more, much more preferably 80 mol% or more, of propylene component structural units. Examples of the PP resin include propylene homopolymers, copolymers of a propylene component and another polymerizable monomer component (provided that the copolymers satisfy the requirement concerning the content of the propylene component structural units), and mixtures of an above-mentioned propylene homopolymer and/or copolymer and one or more other polymers (provided that the mixtures satisfy the requirement concerning the content of the propylene component structural units). Specific examples of the PP resin include propylene homopolymers (h-PP), propylene-ethylene random copolymers, propylene-ethylene-butene random copolymers (r-PP) and propylene-ethylene block copolymers (b-PP). Examples of other polymers that can be mixed with the propylene polymers include thermoplastic elastomers (such as styrene-butadiene block copolymers), ethylene-propylene rubber, polystyrene-based resins and polyethylene-based resins.

The PP resin contained in the resin composition is preferably a propylene-ethylene block copolymer. When the resin composition contains the above-mentioned crystallization promoter and a propylene-ethylene block copolymer, the tensile elongation at break at 80°C and half-crystallization time of the resin composition can be easily adjusted to the desired ranges. The propylene-ethylene block copolymer may be a copolymer which is obtained by adding ethylene to the polymerization system in the late stage of polymerization of propylene and in which polyethylene domains are dispersed in a polypropylene matrix via ethylene-polypropylene rubber (EPR), or a copolymer in which EPR domains are dispersed in a polypropylene matrix.

The PP resin preferably has a melting point of 120 to 170°C and a melt flow rate (MFR) of 0.01 to 10 g/10 min from the standpoint of blow moldability. The melting point is measured after the test piece has been subjected to a determined heat treatment according to Conditioning of Test Samples (2) of JIS K7121 (1987). The melt flow rate (MFR) of the PP resin is measured according to the test condition M of JIS K7210 (1987) (temperature: 230°C, load: 21.18 N).

The PP resin composition may be added with various kinds of additives as needed in addition to the above-mentioned crystallization promoter. Examples of the additives include an electrical conductivity imparting agent, an antioxidant, a thermal stabilizer, an anti-weathering agent, a UV protecting agent, a flame retardant, an inorganic filler, an antibacterial agent, an electromagnetic waves shielding agent, a gas barrier agent, and an antistatic agent. Each additive is added in such an amount that it can produce its intended effect, and the total amount of the additives is approximately 10 parts by weight or less, preferably 5 parts by weight or less, much more preferably 3 parts by weight or less, based on 100 parts by weight of the PP resin.

In the present invention, because the half-crystallization time and tensile elongation at break of the PP resin composition used to form the skin are adjusted to specific ranges as described above, the steam pins can be properly inserted through the skin even when the temperature of the resin of the skin is high.

In addition, according to the production method of the present invention, because the tensile elongation at break is adjusted to the above specific range, the resin of the skin is moderately stretched following the steam pins during the insertion of the steam pins as shown in FIG. 1 (b). Thus, improper punching of the skin by the steam pins and leakage of steam can be prevented. As a result, a skin-covered foamed molded article having high fusion-bonding strength between the expanded beads can be obtained. Namely, adjustment of the half-crystallization time and tensile elongation at break of the PP resin composition to the above-mentioned specific ranges enables the molding cycle time to be shortened. Additionally, a good skin-covered foamed molded article having high fusion-bonding strength between the expanded beads can be obtained.

As the resin of which the expanded beads are constituted, a thermoplastic resin, in particular, a resin that can fuse-bond to the skin when heated, is preferred in view of the adhesion strength to the skin. When the expanded beads are constituted of the same PP resin or the same kind of PP resin as the resin for the skin, the expanded beads can fuse-bond so strongly to the skin that a skin-covered foamed molded article having higher strength can be obtained.

The apparent density of the expanded beads is not specifically limited but is preferably 0.015 to 0.3 g/cm$^3$. Further, the use of expanded beads having an apparent density of 0.020 to 0.15 g/cm$^3$ is more preferred because the rate of secondary expansion of the expanded beads can be controlled easily by controlling the heating medium that is used to heat the expanded beads.

The expanded beads can be produced by any known suitable method. For example, the expanded beads may be obtained by a method including the steps of dispersing resin particles in a required amount of a dispersion medium (usually, water) to which a surfactant has been added as needed in a pressure container that can be closed airtightly, such as an autoclave, introducing a blowing agent under pressure into the container, heating the mixture with stirring until the resin particles are impregnated with the blowing agent, and, after the elapse of a certain period of time, releasing the expandable resin particles containing the blowing agent from the high-temperature high-pressure conditions in the container into a lower pressure region (usually, a region with atmospheric pressure) together with the dispersion medium to cause the resin particles to foam and expand into expanded beads.

The method for producing a skin-covered foamed molded article according to the present invention is specifically described below. First, a parison, in a softened state, extruded from an extruder is placed between mold halves of a dividable mold, and the mold is closed. Then, a pressurized gas (usually, air) is blown into the parison through blow pins to form a skin having an outer surface in contact with the inner surface of the mold cavity and reflecting the shape of the mold by blow molding.

When the skin is formed by blow molding, the space between the outer surface of the parison and the inner surface of the mold cavity is preferably evacuated so that a skin reflecting the shape of the mold cavity can be produced easily.

In the method of the present invention, when the parison in a softened state is formed into the skin by blow molding, a gas is introduced into the parison at a pressure of approximately 0.5 MPa(G) although it depends on the intended shape of the resulting skin-covered formed molded article or the fluidity of the resin of the parison. The mold is preferably maintained at a temperature of 70 to 80°C.

After completion of the blow molding of the parison into the skin 1 (FIG. 1 (a), steam pins 2 are inserted through the guides 8 and through the skin 1 (FIG. 1 (b)). The steam pins are preferably in the form of a hollow tube having a closed tip. The shape of the tip of the steam pins is not specifically limited as long as the steam pins can punch a hole through the skin. For example, pins having a tip depressed concavely, pins having a sharply pointed tip, or pins having a flat tip may be used.

The steam pins 2 that are inserted into the hollow interior space of the skin 1 are usually used not only to supply the heating medium thereinto but also to discharge the heating medium therefrom. A plurality of steam pins 2 are usually used. The number of the steam pins 2 and the intervals between the steam pins 2 are not specifically limited as long as steam can be sufficiently supplied to fuse-bond the expanded beads to each other.

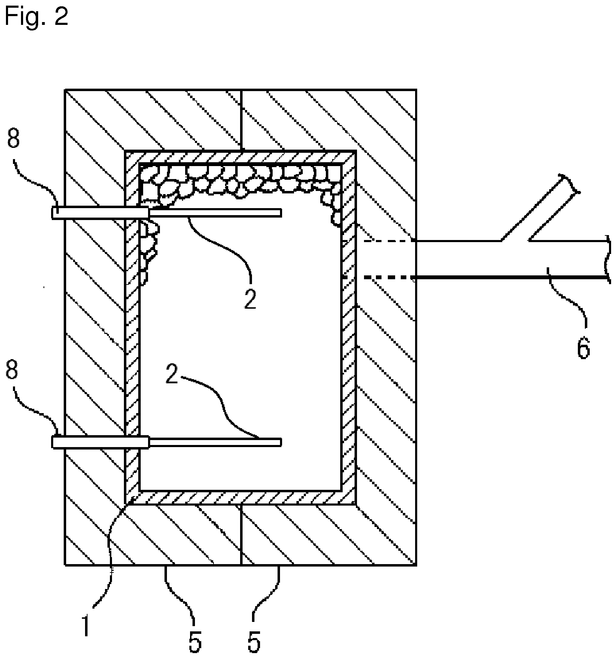

After completion of insertion of the steam pins 2, the expanded beads are fed through a supply conduit 6 attached to the mold 5 into the hollow interior space of the skin 1 as shown in FIG. 2. Thereafter, a heating medium is supplied into the hollow interior space through the slits 3 of the steam pins 2 so that the expanded beads are heated and fuse-bonded to each other. When steam is used as the heating medium, the vapor pressure thereof is preferably 0.15 MPa to 0.6 MPa(G), more preferably 0.18 MPa to 0.5MPa(G). As a method for heating the expanded beads with the heating medium, there may be used a one-direction flow heating method, in which the heating medium is supplied from steam pins provided in one side of the mold and discharged from steam pins provided in the other side of the mold, or an alternate flow heating method in which the one-direction flow heating and flow reversal of the one-direction flow heating are alternately carried out. To fuse-bond the expanded beads strongly, the alternate flow heating method (i.e.

an both-direction heating method) is preferred.

The following examples and comparative examples will further illustrate the present invention. It is without saying that the present invention is not limited to the specific examples.

The crystallization promoters and PP resins used in the examples and comparative examples are shown in Table 1 and Table 2, respectively.

Table 1

| Crystallization promoter | Trade name | Compound name | Manufacturer |
|---|---|---|---|
| Aromatic phosphoric ester metal salt compound | Adekastab NA-11 | Sodium 2,2-methylene-bis(4,6-di-t-butylphenyl)phosphate | ADEKA Corporation |
| | Adekastab NA-27 | 2-Hydroxy-2-oxo-4,6,10,12-tetra-t-butyl-1,3,2-dibenzo[d,g]-perhydrodioxaphosphocin sodium salt | ADEKA Corporation |
| Sorbitol compound | GEL ALL MD | 1,3,2,4-bis-O-(4-methylbenzylidene)-D-sorbitol | New Japan Chemical Co., Ltd |

Table 2

| Resin | Trade name | Manufacturer |
|---|---|---|
| Propylene-ethylene block copolymer | E-150GK | Prime Polymer Co., Ltd. |
| Propylene-ethylene random copolymer | WFX6 | Japan Polypropylene Corporation |

The physical properties were evaluated by the following methods in the Examples and Comparative Examples.

Tensile elongation at break

The tensile elongation at break was measured according to JIS K7127 (1999) using a combination of a Tensilon universal tester manufactured by Orientec Co., Ltd. and a constant temperature reservoir for a tensile tester manufactured by Toyo Baldwin Co, Ltd. in combination. Specifically, a piece was cut out of the skin and heat-pressed (pressing temperature: 220°C) into a type 5 test piece with a thickness of 0.27 mm. After the test piece had been held in the constant temperature reservoir at 80°C for 60 seconds, a tensile test was conducted at an inter-chuck distance of 25 mm and a tension rate of 500 mm/min. The value measured in this way was employed as the tensile elongation at break.

Half-crystallization time

To measure the half-crystallization time, a sample was prepared by cutting a piece out of the skin and heat-pressing (pressing temperature: 220°C) the piece into a film-like form. The film sample had a thickness of $0.1 \pm 0.02$ mm and a square shape with dimensions of 15 x 15 mm. The sample was sandwiched between microscope cover glasses as a support and placed in the air bath of a crystallization speed analyzer (MK-801, manufactured by Kotaki Seisakusho Ltd.) until the sample was completely melted. Then, the molten sample was placed, together with the support, between polarization plates arranged perpendicular to each other in an oil bath maintained at 130°C. Intensity of transmitted light which changes due to an increase of optically anisotropic component as the crystallization of the sample proceeds, was measured (depolarization method). The half-crystallization time was calculated from the time it took for the degree of crystallization to reach 1/2 using the Avrami equation shown below.

$$1-Xc = Exp(-kt^n)$$

$$1-Xc = (It-Ig)/(I_0-Ig)$$

(wherein Xc: degree of crystallization, k: crystallization speed constant, n: Avrami constant, t: time (seconds), $I_0$: depo-

larized transmitted light intensity at the start, It: depolarized transmitted light intensity at t seconds later, Ig: depolarized transmitted light intensity at the end).

The depolarization method is a method that is useful to measure a high crystallization speed as described in "Shin-Jikkenn Kagaku Koza Vol. 19, Polymer Chemistry (II), p788 (Maruzen)."

Skin thickness

The skin thickness of the skin-covered foamed molded article was determined as follows. The obtained skin-covered foamed molded article was sliced in its thickness direction at three locations, and the thickness of the skin was measured at six points spaced regularly along the circumference of each cross-section (except portions having a special shape). The arithmetic mean of the thicknesses at the eighteen points was defined as the skin thickness.

Apparent density of expanded beads

The apparent density of the expanded beads was obtained by immersing expanded beads (weight: W(g)) in water in a measuring cylinder using a metal mesh, obtaining the volume V(L) of the expanded beads from the rise of the water level, and converting the unit of a value obtained by dividing the weight W of the expanded beads by the volume V of the expanded beads (W/V) to [kg/m$^3$].

Time upto insertion of steam pins and temperature at insertion of steam pins

The period of time from the time when mold halves for blow molding were closed after the parison had been placed therebetween to the time when the insertion of steam pins through the resulting skin was completed was defined as "time upto insertion of steam pins". The temperature of the skin when the pins were inserted through the skin was defined as "temperature at pin insertion".

Fusion-bonding strength between expanded beads and skin

Five test pieces each having the skin and a size of 100 mm x 100 mm were cut out of the center and four corner portions (except the rounded portions) of the obtained plate-like skin-covered foamed molded article as test pieces for evaluation of the fusion-bonding strength between the skin and the expanded beads. The skin of each test piece was peeled off and 100 or more expanded beads in the peeled surface were visually observed to count the number of broken expanded beads and the number of expanded beads separated along an interface between the expanded beads and the skin. The percentage of the number of the broken expanded beads to the sum of the number of broken expanded beads and the number of expanded beads separated along an interface between the expanded beads and the skin was obtained for each test peace. The smallest percentage value among the percentage values of the five test pieces was defined as the fusion-bonding rate between the skin and the expanded beads. The fusion-bonding strength was evaluated on the basis of the fusion-bonding rate according to the following criteria.

Good: The fusion-bonding rate is 50% or higher.
Bad: The fusion-bonding rate is lower than 50%.

Fusion-bonding strength between expanded beads

Five test pieces that did not include the skin and had a size of 100 mm x 100 mm x (thickness of the skin-covered foamed molded article without the skin) were cut out of the center and four corner portions (except the rounded portions) of the obtained plate-like skin-covered foamed molded article as test pieces for evaluation of the fusion-bonding strength between the expanded beads. Each of the test pieces was broken into two halves, and 100 or more expanded beads in the broken surface were visually observed to count the number of broken expanded beads and the number of expanded beads separated along their interface. The percentage of the number of the broken expanded beads to the sum of the number of broken expanded beads and the number of expanded beads separated along their interface was obtained for each the five test piece. The smallest percentage value among the percentage values of the five test pieces was defined as fusion-bonding rate of the expanded beads. The fusion-bonding strength was evaluated on the basis of the fusion-bonding rate according to the following criteria.

Good: The fusion-bonding rate is 50% or higher.
Bad: The fusion-bonding rate is lower than 50%.

Formation state of steam pin insertion holes and resin following length

In the present invention, evaluation was made based on the length by which the resin of the skin was drawn by the steam pins during insertion of the pins through the skin according to the following criteria.

Good: The length by which the resin of the skin was drawn by the steam pins during insertion of the pins was not less than 1 mm and not greater than 5 mm, and no problem, such as steam leakage, was observed.
Bad: The steam pins were not able to be inserted through the skin, or the length by which the resin of the skin was drawn by the steam pins was less than 1 mm or greater than 5 mm, and steam was not able to be supplied uniformly.

Total molding cycle time

The period of time (seconds) from the time when the mold halves were closed to the time when the final product was taken out of the mold was defined as total molding cycle time.

Example 1

A quantity of the PP resin shown in Table 2 (manufactured by Prime Polymer Co., Ltd., trade name: Prime Polypro, grade: E-150GK, melt flow rate (MFR): 0.6 g/10 min (230°C, load: 21.18 N)) and a quantity of a master batch of the crystallization promoter shown in Table 1 (manufactured by ADEKA Corporation, trade name: Adekastab NA-11) in the same PP resin were supplied to an extruder having an inside diameter of 65 mm, and heated to 210°C and kneaded therein to prepare a melt of the resin composition having a content of the crystallization promoter as shown in Table 3.
The melt of the resin composition was filled in an accumulator attached to the extruder and adjusted to 210°C. The melt of the resin composition was then extruded through a die to obtain a parison. The parison in a softened state was placed between mold halves of a dividable flat plate-like mold located immediately below the die. The mold halves each had an open cavity with a length of 730 mm, a width of 420 mm and a depth of 15 mm and, when brought together, defined a mold cavity having a length of 730 mm, a width of 420 mm and a thickness of 30 mm. Then, the mold was closed. The temperature of the mold had been adjusted to 80°C. Pressurized air with a pressure of 0.50 MPa(G) was then blown into the parison from a blow gas introduction hole, while evacuating the space between the outer surface of the parison and the inner surface of the mold, whereby a hollow blow-molded product (skin defining a hollow interior space) conforming to the shape of the mold cavity was obtained. As the mold, use was made of a molding apparatus for producing a skin-covered foamed molded article equipped with an expanded bead supply conduit (diameter: 18 mmφ) and eight (8) guides each adapted for being inserted with a steam pin (diameter: 8 mmφ). The eight guides were provided in one of the opposing sides of the mold halves and arranged in two parallel rows in the lengthwise direction of the mold cavity and four parallel columns in the widthwise direction of the mold cavity with each row consisting of four equally spaced apart guides.
Then, the eight steam pins were inserted through corresponding guides into the hollow interior space of the skin still in a softened state within the mold cavity. The eight steam pins were divided into two, first and second groups each consisting of four steam pins in such a way that adjacent steam pins in each row and adjacent steam pins in each column belonged to different groups. Thus, the four seam pins in each group, when inserted into respective guides, were arranged in a staggered pattern in the lengthwise direction of the mold cavity.
Then, PP resin expanded beads with an apparent density of 0.048 g/cm$^3$ were filled in the hollow interior space of the skin. During the filling of the expanded beads, the hollow interior space was evacuated through slits formed through the peripheral walls of the steam pins while adjusting the pressure in the hollow interior space of the skin.
After the filling of the expanded beads had been completed, steam with a pressure of 0.36 MPa(G) was supplied into the hollow interior space for 8 seconds through the first group of steam pins while steam was being sucked out of the hollow interior space through the second group of steam pins.
Then, steam with a pressure of 0.36 MPa(G) was supplied into the hollow interior space through the second group of steam pins for 8 seconds while steam was being sucked out through the first group of steam pins. Finally, steam with a pressure of 0.36 MPa(G) was supplied through all the first and second groups of steam pins for 8 seconds to heat and fuse-bond the expanded beads together and to fuse-bond the expanded beads to the inner surface of the skin. The mold was cooled and then opened to take the intended skin-covered foamed molded article therefrom. The time upto insertion of steam pins, the temperature at pin insertion, the formation state of steam pin insertion holes, the resin following length, the fusion-bonding strength (between the skin and the expanded beads and between the expanded beads), and the total molding cycle time are shown in Table 4.
In Example 1, the steam pins were able to be inserted through the skin even when the temperature of the skin was 95°C, which means that the steam pin insertion temperature range is widened as compared with the conventional method. Thus, a skin-covered foamed molded article can be produced more easily by the method of the present invention.

Example 2

A skin-covered foamed molded article was produced in the same manner as that in Example 1 except that the amount of the crystallization promoter was increased as shown in Table 3. The half-crystallization time at 130°C of the resin composition was reduced to 24 seconds. The formation state of steam pin insertion holes, the resin following length, the fusion-bonding strength of the expanded beads, the total molding cycle time and so on are shown in Table 4. Because the half-crystallization time was shortened to 24 seconds, which is shorter than that in Example 1, the total molding cycle time was able to be shortened while ensuring the desired steam pin insertion efficiency and the fusion-bonding strength of the expanded beads.

Example 3

A skin-covered foamed molded article was produced in the same manner as that in Example 1 except that the amount of the crystallization promoter was increased as shown in Table 3. The half-crystallization time at 130°C of the resin composition was reduced to 23 seconds. The formation state of steam pin insertion holes, the resin following length, the fusion-bonding strength of the expanded beads, the total molding cycle time and so on are shown in Table 4.

Example 4

A skin-covered foamed molded article was produced in the same manner as that in Example 1 except that NA-27 was substituted for NA-11 as shown in Table 3. The half-crystallization time at 130°C and the tensile elongation at break at 80°C of the resin composition were reduced to 29 seconds and 790%, respectively. The formation state of steam pin insertion holes, the resin following length, the fusion-bonding strength of the expanded beads, the total molding cycle time and so on are shown in Table 4. Because NA-27 is superior in dispersibility to NA-11, the half-crystallization time at 130°C was shortened compared to Example 1 even when the content of the crystallization promoter was the same.

Example 5

A skin-covered foamed molded article was produced in the same manner as in Example 1 except that the kind and amount of the crystallization promoter were changed as shown in Table 3. The half-crystallization time at 130°C and the tensile elongation at break at 80°C of the resin composition were reduced to 22 seconds and 790%, respectively. The formation state of steam pin insertion holes, the resin following length, the fusion-bonding strengths of the expanded beads, the total molding cycle time and so on are shown in Table 4.

Example 6

A skin-covered foamed molded article was produced in the same manner as in Example 1 except that a mixture of E-150GK/WFX6 = 7/3 was used in lieu of E-150GK as shown in Table 3. The half-crystallization time at 130°C and the tensile elongation at break at 80°C of the resin composition were 38 second and 780%, respectively. The formation state of steam pin insertion holes, the resin following length, the fusion-bonding strengths of the expanded beads, the total molding cycle time and so on are shown in Table 4. Because the proportion of a propylene-ethylene random copolymer was increased, the stretchability of the resin composition was slightly lower than that in Example 1. Thus, the tensile elongation at break at 80°C of the resin composition was smaller and the resin following length tended to be shorter than those in Example 1.

Comparative Example 1

A skin-covered foamed molded article was produced in the same manner as that in Example 5 except for reducing the amount of GEL ALL MD as shown in Table 3. Because the half-crystallization time at 130°C of the resin composition was as long as 111 seconds, it took a longer time for the skin to cool to a temperature at which the steam pins was able to be inserted through the skin. As a result, the problem of long total molding cycle time remained unsolved.

Comparative Example 2

A skin-covered foamed molded article was produced in the same manner as that in Example 1 except for using no crystallization promoter. Because the half-crystallization time at 130°C of the resin composition was 284 seconds and the tensile elongation at break at 80°C was 1,200% or greater as shown in Table 3, the resin of the skin was still in a softened state and excessively stretched following the steam pins when the steam pins were inserted through the skin.

Thus, because the steam pin insertion holes were not able to be formed properly enough that steam was able to be supplied sufficiently to the expanded beads, the fusion-bonding strength both between the expanded beads and between the skin and the expanded beads was poor. As a result, the obtained skin-covered foamed molded article had molding defects.

Comparative Example 3

A skin-covered foamed molded article was produced in the same manner as that in Comparative Example 2 except that the temperature at pin insertion was lowered to 75°C as shown in Table 3. The steam pin insertion holes were able to be formed when the time upto insertion of the steam pins was prolonged to 50 seconds. As a result, the total molding cycle time was prolonged as shown in Table 4.

Comparative Example 4

A skin-covered foamed molded article was produced in the same manner as that in Example 6 except for using no crystallization promoter as shown in Table 3. The half-crystallization time at 130°C was 209 seconds and the tensile elongation at break at 80°C was 1200% or greater. Though a good skin-covered foamed molded article was obtained, the time upto insertion of steam pins was so long that a long total molding cycle time was required as shown in Table 4.

Table 3

| Example | Base resin | Crystallization promoter | Amount of crystallization promoter added | Resin composition | | |
|---|---|---|---|---|---|---|
| | | | | Half-crystallization time at 130°C | Tensile elongation at 80°C upon heating | Crystallization temperature of resin |
| | - | Trade name | Parts by weight | Seconds | % | °C |
| 1 | E-150GK | NA-11[*1] | 0.05 | 41 | 800 | 129 |
| 2 | E-150GK | NA-11[*1] | 0.1 | 24 | 800 | 130 |
| 3 | E-150GK | NA-11[*1] | 0.2 | 23 | 800 | 131 |
| 4 | E-150GK | NA-27[*2] | 0.05 | 29 | 790 | 130 |
| 5 | E-150GK | GEL ALL MD | 0.3 | 22 | 790 | 130 |
| 6 | E-150GK/WFX6=7/3 | NA-11[*1] | 0.05 | 38 | 780 | 128 |
| Comp. 1 | E-150GK | GEL ALL MD | 0.1 | 111 | 900 | 122 |
| Comp. 2 | E-150GK | Nil | - | 284 | >1200 | 117 |
| Comp. 3 | E-150GK | Nil | - | 284 | >1200 | 117 |
| Comp. 4 | E-150GK/WFX6=7/3 | Nil | - | 209 | >1200 | 121 |

[*1] NA-11: Adekastab NA-11
[*2] NA-27: Adekastab NA-27

EP 2 889 119 B1

Table 4

| Example | Skin | Expanded beads | Steam pins | | Fusion-bonding strength | | Formation state of steam pin insertion holes | Resin following length | Total molding cycle time |
|---|---|---|---|---|---|---|---|---|---|
| | Thickness | Apparent density | Time upto insertion of steam pins | Temperature at pin insertion | Between skin and expanded beads | Between expanded beads | | | |
| | mm | g/cm$^3$ | Seconds | °C | - | - | - | mm | Seconds |
| 1 | 3.5 | 0.048 | 25 | 95 | Good | Good | Good | 3 | 245 |
| 2 | 3.5 | 0.048 | 20 | 100 | Good | Good | Good | 3 | 240 |
| 3 | 3.5 | 0.048 | 20 | 100 | Good | Good | Good | 3 | 240 |
| 4 | 3.5 | 0.048 | 20 | 100 | Good | Good | Good | 2.8 | 240 |
| 5 | 3.5 | 0.048 | 20 | 100 | Good | Good | Good | 2.8 | 240 |
| 6 | 3.5 | 0.048 | 20 | 100 | Good | Good | Good | 2.5 | 240 |
| Comp. 1 | 3.5 | 0.048 | 40 | 80 | Good | Good | Good | 4 | 260 |
| Comp. 2 | 3.5 | 0.048 | 25 | 95 | Bad | Bad | Bad | 10 | 245 |
| Comp. 3 | 3.5 | 0.048 | 50 | 75 | Good | Good | Good | 3 | 270 |
| Comp. 4 | 3.5 | 0.048 | 45 | 80 | Good | Good | Good | 4 | 265 |

14

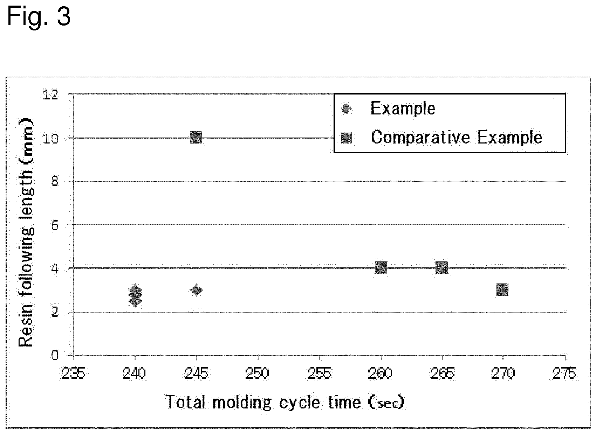

The results shown in Table 4 are also shown in FIG. 3. As shown in FIG. 3, the resin following length tended to be too large and the fusion-bonding strength therefore tended to be poor when the time upto insertion of steam pins was shortened to shorten the total molding cycle time (Comparative Example 2) or the total molding cycle time was not able to be shortened because the time upto insertion of steam pins tended to be long when the resin following length was adjusted to a desired range in order to improve the fusion-bonding strength (Comparative Examples 1, 3 and 4). On the other hand, in Examples 1 to 6, the total molding cycle time was able to be shortened and, at the same time, the resin following length was able to be adjusted to a desired range.

**Claims**

1. A method for producing a skin-covered foamed molded article, comprising the steps of:

   extruding a melt of a polypropylene-based resin composition to form a parison in a softened state; blow-molding the parison into a skin 1 in which a hollow interior space is formed; inserting heating medium supply pins 2 through the skin 1 ; filling thermoplastic resin expanded beads in the hollow interior space of the skin 1; and supplying a heating medium into the hollow interior space of the skin 1 through the heating medium supply pins 2 to fuse-bond the expanded beads filled in the hollow interior space of the skin 1 to each other, **characterized in that** the polypropylene-based resin composition contains at least one crystallization promoter selected from aromatic phosphoric ester metal salt compounds and sorbitol compounds, and satisfies the following requirements (A) and (B) :

   (A) the polypropylene-based resin composition has a tensile elongation at break at 80°C of 300 to 1,000% according to JIS K 7127 (1999); and
   (B) the polypropylene-based resin composition has a half-crystallization time at 130°C of 5 to 50 seconds, wherein the half-crystallization time is determined by a method in which the polypropylene-based resin composition is formed into a film-like sample, the film-like sample is mounted on a support and is placed in an oil bath maintained at 130°C, a measurement value of transmitted light of the film-like sample is measured by the crystallization speed analyzer, and the half-crystallization time is calculated from the measurement value and an Avrami equation.

2. The method for producing a skin-covered foamed molded article according to claim 1, wherein the crystallization promoter is present in an amount of 0.01 to 1 part by weight based on 100 parts by weight of the polypropylene-based resin contained in the polypropylene-based resin composition.

3. The method for producing a skin-covered foamed molded article according to any one of claim 1 or 2, wherein the thermoplastic resin of the thermoplastic resin expanded beads is a polypropylene-based resin.

4. The method for producing a skin-covered foamed molded article according to any one of claims 1 to 3, wherein the skin 1 has a thickness of 1.5 to 5 mm.

**Patentansprüche**

1. Verfahren zur Herstellung eines von einer Haut bedeckten, geschäumten Formteils, umfassend die folgenden Schritte:

   Extrudieren einer Schmelze eines polypropylenbasierten Harzgemischs zur Bildung eines Vorformlings in einem weichen Zustand;
   Blasformen des Vorformlings zu einer Haut 1, innerhalb welcher ein hohler Innenraum ausgebildet ist;
   Einbringen von Heizmedium-Zuführungsanschlüssen 2 durch die Haut 1; Einfüllen von expandierten thermoplastischen Harzkügelchen in den hohlen Innenraum der Haut 1; und
   Zuführen eines Heizmediums in den hohlen Innenraum der Haut 1 durch die Heizmedium-Zuführungsanschlüsse 2, um die in den hohlen Innenraum der Haut 1 eingefüllten expandierten Kügelchen durch Verschmelzen miteinander zu verbinden, **dadurch gekennzeichnet, dass**

das polypropylenbasierte Harzgemisch mindestens einen Kristallisations-Beschleuniger, ausgewählt aus aromatischen Phosphorsäureester-Metallsalzverbindungen und Sorbitverbindungen, enthält und die folgenden Bedingungen (A) und (B) erfüllt:

(A) das polypropylenbasierte Harzgemisch weist bei 80°C eine Bruchdehnung von 300 bis 1000% gemäß der Norm JIS K 7127 (1999) auf; und
(B) das polypropylenbasierte Harzgemisch weist bei 130°C eine Halb-Kristallisationszeit von 5 bis 50 Sekunden auf, wobei die Halb-Kristallisationszeit durch ein Verfahren bestimmt wird, bei welchem das polypropylenbasierte Harzgemisch zu einer filmartigen Probe geformt wird, die filmartige Probe auf einen Träger aufgebracht und in ein Ölbad eingebracht wird, welches auf 130°C gehalten wird, ein Messwert des von der filmartigen Probe transmittierten Lichts mithilfe des Kristallisations-Geschwindigkeits-Analysators gemessen wird und die Halb-Kristallisationszeit aus dem Messwert und einer Avrami-Gleichung berechnet wird.

2. Verfahren zur Herstellung eines von einer Haut bedeckten, geschäumten Formteils nach Anspruch 1, wobei der Kristallisations-Beschleuniger mit einem Anteil von 0,01 bis 1 Gewichtsteil bezogen auf 100 Gewichtsteile des polypropylenbasierten Harzes in dem polypropylenbasierten Harzgemisch enthalten ist.

3. Verfahren zur Herstellung eines von einer Haut bedeckten, geschäumten Formteils nach Anspruch 1 oder 2, wobei das thermoplastische Harz der expandierten thermoplastischen Harzkügelchen ein polypropylenbasiertes Harz ist.

4. Verfahren zur Herstellung eines von einer Haut bedeckten, geschäumten Formteils nach einem der Ansprüche 1 bis 3, wobei die Haut 1 eine Dicke von 1,5 bis 5 mm aufweist.

## Revendications

1. Procédé de production d'un article moulé en mousse recouvert de peau, comprenant les étapes consistant à :

extruder une matière fondue d'une composition de résine à base de polypropylène pour former une préforme à l'état ramolli ;
mouler par soufflage la préforme en une peau 1 dans laquelle un espace intérieur creux est formé ;
insérer des broches d'alimentation en milieu de chauffage 2 à travers la peau 1;
charger les billes expansées de résine thermoplastique dans l'espace intérieur creux de la peau 1 ;
et fournir un milieu de chauffage dans l'espace intérieur creux de la peau 1 par le biais des broches d'alimentation en milieu de chauffage 2 afin de lier par fusion les billes expansées chargées dans l'espace intérieur creux de la peau 1 les unes aux autres, et
**caractérisé en ce que**
la composition de résine à base de polypropylène contient au moins un promoteur de cristallisation choisi parmi les composés de sel métallique d'ester phosphorique aromatique et les composés de sorbitol, et répond aux exigences suivantes (A) et (B) :

(A) la composition de résine à base de polypropylène a un allongement à la rupture en traction à 80 °C de 300 à 1000 % selon la norme JIS K 7127 (1999) ;
et
(B) la composition de résine à base de polypropylène a une demi-vie de cristallisation à 130 °C de 5 à 50 secondes, dans lequel la demi-vie de cristallisation est déterminée par un procédé dans lequel la composition de résine à base de polypropylène prend la forme d'un échantillon de type film, l'échantillon de type film est monté sur un support et est placé dans un bain d'huile maintenu à 130 °C, une valeur de mesure de la lumière transmise par l'échantillon de type film est mesurée par l'analyseur de vitesse de cristallisation et la demi-vie de cristallisation est calculée à partir de la valeur de mesure et une équation d'Avrami.

2. Procédé de production d'un article moulé en mousse recouvert de peau selon la revendication 1, dans lequel le promoteur de cristallisation est présent en une quantité de 0,01 à 1 partie en poids sur la base de 100 parties en poids de la résine à base de polypropylène contenue dans la composition de résine à base de polypropylène.

3. Procédé de production d'un article moulé en mousse recouvert de peau selon l'une quelconque des revendications 1 ou 2, dans lequel la résine thermoplastique des billes expansées de résine thermoplastique est une résine à base de polypropylène.

4. Procédé de production d'un article moulé en mousse recouvert de peau selon l'une quelconque des revendications 1 à 3, dans lequel la peau 1 a une épaisseur de 1,5 à 5 mm.

Fig. 1(a)

Fig. 1(b)

EP 2 889 119 B1

Fig. 2

20

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010046920 A
- JP 2008273117 A
- EP 2614942 A1
- WO 2013148977 A1

**Non-patent literature cited in the description**

- Polymer Chemistry (II). Shin-Jikkenn Kagaku Koza. Maruzen, vol. 19, 788